(19) Europäisches Patentamt
European Patent Office
Office européen des brevets

(11) **EP 2 798 237 B1**

(12) **EUROPEAN PATENT SPECIFICATION**

(45) Date of publication and mention of the grant of the patent:
**04.05.2016 Bulletin 2016/18**

(21) Application number: **12813891.4**

(22) Date of filing: **28.12.2012**

(51) Int Cl.:
*F16G 5/16* (2006.01)     *F16H 55/38* (2006.01)

(86) International application number:
**PCT/EP2012/077068**

(87) International publication number:
**WO 2013/098400 (04.07.2013 Gazette 2013/27)**

(54) **BELT-AND-PULLEY CONTINUOUSLY VARIABLE TRANSMISSION**

STUFENLOSES RIEMENGETRIEBE

TRANSMISSION À VARIATION CONTINUE AVEC COURROIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.12.2011 NL 1039278**

(43) Date of publication of application:
**05.11.2014 Bulletin 2014/45**

(73) Proprietor: **Robert Bosch GmbH**
**70442 Stuttgart (DE)**

(72) Inventors:
• **VAN DER HEIJDE, Ronald Eduard Henri**
**NL-5000AM Tilburg (NL)**

• **KUBE, Dirk**
**NL-5000AM Tilburg (NL)**

(74) Representative: **Plevier, Gabriel Anton Johan Maria**
**Bosch Transmission Technology B.V.**
**IP section (GS-CT/NE)**
**postbus 500**
**5000 AM Tilburg (NL)**

(56) References cited:
**EP-A2- 0 997 670       JP-A- 9 229 150**
**JP-A- 2004 132 457     JP-A- 2010 222 673**
**US-A1- 2005 217 111    US-A1- 2005 221 938**

**Description**

The present invention relates to the continuously variable transmission that is defined in the preamble of claim 1 hereinafter.

Such a "belt-and-pulley" transmission is generally known in the art, for example from EP 0 777 069 B1, and is a/o used for transmitting mechanical power in a motor vehicle from an engine to a load, i.e. the driven wheels, at a continuously variable speed or torque ratio. In the well-known automotive application of the known transmission, it typically incorporates a drive belt whereof the lateral side faces that contact the pulleys of the transmission are mutually oriented at a belt angle of 22 degrees. Each transmission pulley is provided with two pulley discs that each define a conical running surface for the drive belt, between which pulley discs and running surfaces a V-shaped circumferential groove having a V-angle corresponding to the belt angle is defined. The two pulley discs of each pulley can be urged towards each other by means of activation means, such as a hydraulically operated piston-and-cylinder assembly, to clamp the drive belt between such discs.

During operation of the transmission the lateral side faces of the drive belt arrive in frictional contact with the running surfaces of the pulleys, such that a tangentially oriented force can be exerted there between and a rotation of one pulley can be transferred to the other one pulley by means of the drive belt. In order to prevent such frictional contacts from overheating, a liquid coolant or lubrication oil is circulated in the transmission.

For an efficient power transfer by the transmission, the friction between the pulleys and the drive belt is preferably set as high as possible. Further, for optimum durability of the transmission, the wear of the pulleys and of the drive belt is preferably as low as possible. These preferred conditions of high friction and low wear are, in practice, mutually contradictory. Indeed, without resorting to exotic technical measures, the technologies that are commonly available for increasing friction, typically also increase wear as a side effect. For example, lubrication oil that is provided with additives that increase friction typically also causes more wear, i.e. increases the rate of wear relative to similar lubrication oil without such friction-increasing additives. A further example is that it is known in the art that increasing the roughness of a surface involved in a frictional contact, will normally increase not only the (coefficient of) friction in such contact, but also the wear rate.

Over the years, it has been a general desire and a development aim in the art of belt-and-pulley continuously variable transmission design, to increase the friction between the drive belt and the pulleys, without detrimentally increasing the wear rate thereof, i.e. whilst maintaining the customary durability of the transmission. Many patent publications are available in this respect, in particular regarding design requirements that are set in relation to the pulley discs. For example, JP 2005-273866 A teaches to manufacture the running surface of the pulley discs with essentially concentric, microscopic grooves and to flatten the surface area of the running surface in between such grooves. Alternatively, EP 0 997 670 A2 and DE 10 2004 051 360 A1 teach to apply an irregular surface texture that is characterized by certain values of one or more (standard) surface roughness parameters, such as the well-known arithmetic mean roughness Ra. Document US 2005217111 shows the preamble of claim 1.

Associated with the available prior art is the problem that many different, sometimes even conflicting, technical teachings are represented thereby in relation to the preferred or optimal design of the pulley discs. Also, in some cases, satisfactory results are not even obtained when applying the known teaching.

The present invention departs from the desire to bring together and reconcile these teachings. In particular in relation to the pulley disc running surface, the invention aims to provide surface specification therefore that is both simple and highly effective in terms of friction and wear resistance. According to the invention such specification for the running surface of the pulley discs in the belt-and-pulley continuously variable transmission is provided in the claim 1 hereinafter.

Underlying the present invention are many exploratory and parameter optimisation experiments, both in relation to the transfer of the tangentially oriented force between the running surface of the pulley disc and the lateral side face of the drive belt. A first observation and insight resulting from these experiments is that, for providing a sensible specification of the running surface, i.e. for the effectiveness and/or mere applicability of the said specification, the frictional contact concerned has to be sufficiently narrowly defined. According to the invention the following five design constraints apply in this respect:

1. The said frictional contact is lubricated by lubrication oil circulating in the transmission.
2. Both components that are involved in the said frictional contact, i.e. both the drive belt and the pulleys, are made of steel, at least at or near the said lateral side face and the running surface thereof, respectively.
3. Both the said components are provided with a hard surface layer having a hardness value in the range between 55 and 65 HRC ("Rockwell C-scale").
4. The lateral side face of the drive belt is profiled in the sense that it includes both projecting parts for contacting the pulley disc and lower lying parts for accommodating (excess) lubrication oil.
5. The running surface of the pulley disc is provided with a microscopic, irregular surface texture that may thus be suitably characterized by a (ISO) standard surface roughness parameter such as Ra, Rq, Rp, Rz, etc.

Within the above five constraints, it was found that for achieving a high friction in the said frictional contact at the desired durability of the transmission, the following surface roughness specification applies to the running surface:

- 0.01 micron < Ra < 1.0 micron,
- Rsk < 0 micron,

with Ra and Rsk being defined in the (ISO) standard manner.

In this design specification, the range for the Ra or "arithmetic average" roughness value is defined to provide a good traction in the frictional contact between the lateral side faces of the drive belt and the running surface of the pulley disc, while at the same time showing a minimal wear rate. Additionally, the negative Rsk or "skewness" roughness value provides that higher lying parts of the roughness profile are broader than lower lying parts thereof, such that the running surface contains pockets for accommodating lubrication oil, in the form of the lower lying parts thereof, while at the same time leaving the bulk of the surface area of the running surface, in the form of the higher lying parts thereof, available for the frictional contact, i.e. for bearing the load. Such surface roughness contour thus favourably avoids the build up of lubrication oil between the engaging, i.e. the higher lying parts, of the surfaces involved in the frictional contact and, hence, a loss of traction there between that could otherwise occur.

According to an elaboration of the invention, the parameter of the surface hardness of the running surface of the pulley disc can be linked to the parameter of the Ra surface roughness value thereof, in such a manner that a softer surface requires a higher surface roughness value than a harder surface to provide the same, or at least a similar, performance in terms of the friction between the pulleys and the drive belt. More in particular, the following preferred dependency has been empirically determined for such parameters:

- $55.5 - 3 \cdot \log(Ra) < SH < 61.5 - 3 \cdot \log(Ra)$

with SH being the surface hardness value in HRC.

Further, according to the invention, it is preferable that the running surface of the pulley disc additionally satisfy the surface roughness specification:

- Rku > 3 micron, preferably > 5 micron,

with Rku being defined in the (ISO) standard manner.

In this design specification the Rku or "kurtosis" roughness value provides that the roughness profile of the running surface of the pulley discs shows relatively sharp transitions also on a relatively small, i.e. zoomed-in scale. This means that the peaks and valleys of the roughness profile are themselves shaped irregularly, i.e. define by many more peaks and valleys of smaller scale. It is hypothesized that such smaller scale surface roughness profile, as defined by the Rku value larger than 3, provides a favourably low wear rate, because it matches the likewise smaller scale of the surface roughness profile of the lateral side faces of the drive belt that are formed relative smooth on a larger scale by the preferred manufacturing process of fine blanking. By these matching small, i.e. fine scales of the said respective roughness profiles, the said lateral side faces can firmly engage the said running surface and the friction force there between is advantageously distributed over many individual peaks of the respective roughness profiles thereof.

Finally, it was found that the initial or running-in wear of the drive belt can be favourably minimized, thereby improving a/o the durability of the transmission as a whole, when the running surface of the pulley disc additionally satisfy the surface roughness specification:

- Rp < 2 micron

with Rp being defined as the height of the highest lying point or peak of the surface roughness profile relative to the average profile height or centreline of such profile.

It is noted that running surface of the pulley discs, i.e. the roughness profile thereof can not be freely formed to satisfy any roughness profile that is conceivable in theory. Rather, in practice, limitations are posed by the manufacturing processes that are available for such purpose, such a grinding, polishing, turning, shot-peening, etc. Still, by the adaptation of the process settings of and/or of the tools used in these known manufacturing processes, a multitude of different roughness profiles is in principle obtainable. Thus, in practice, it is a matter of finding a suitable manufacturing process and process settings thereof for creating a desired roughness profile, based on specialist literature, or simply by trial and error.

The invention will now further be explained by way of examples given in the accompanying drawing wherein:

Figure 1 is a schematic representation of a continuously variable transmission provided with two pulleys and a drive belt, to which transmission the present invention relates;

Figure 2 depicts a section of the drive belt in a perspective view;

Figure 3 is a schematic representation of a corrugated lateral side face of the drive belt; and

Figure 4 depicts a theoretical surface roughness profile for the sake of illustrating the parameters used for calculating Ra, Rsk, Rku and Rp roughness values of a surface roughness profile.

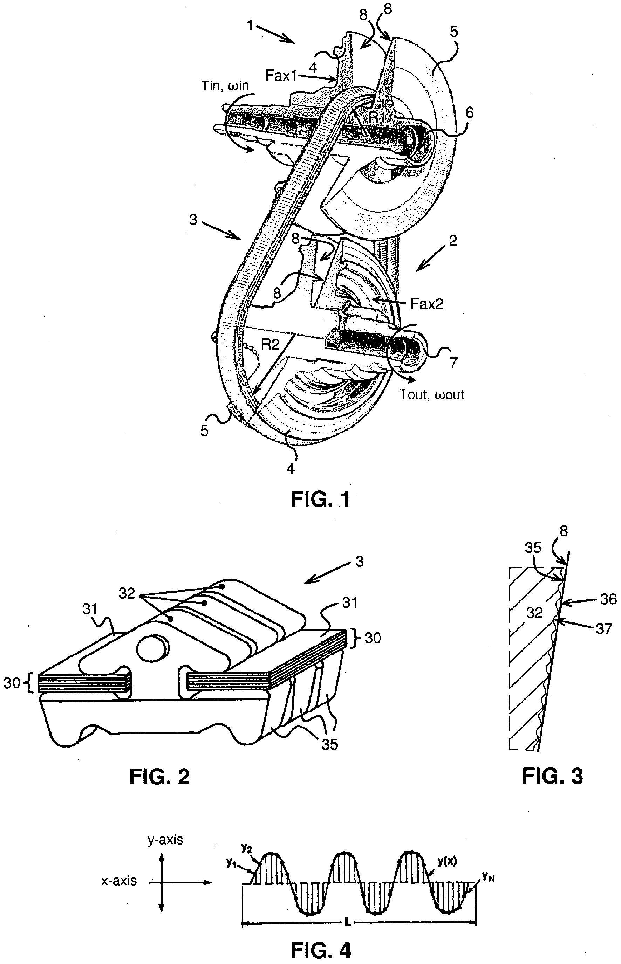

Figure 1 schematically shows the central parts of a belt-and-pulley continuous variable transmission (CVT). The transmission comprises two pulleys 1, 2 and a drive belt 3 for transmitting a rotational movement $\omega$in, $\omega$out and an accompanying torque Tin, Tout from the one pulley 1, 2 to the other 2, 1 at a variable torque ratio Tout/Tin and speed ratio $\omega$in/$\omega$out. To this end, the pulleys 1, 2 both comprise two pulley discs 4, 5 that each provide a generally conically shaped running surface 8 for supporting a lateral side face 35 of the drive belt 3. One pulley disc 4 of each pulley 1, 2 is incorporated in the transmission axially moveable along a respective pulley shaft 6, 7 over which it is placed.

The transmission also includes an activation system (not depicted) that imposes on the said at least one disc 4 of each pulley 1, 2 an axially oriented clamping force Fax1, Fax2 that is directed towards the other pulley disc 5 of the respective pulley 1, 2, such that the drive belt 3 is clamped between such pairs of pulley discs 4, 5 and a force can be transferred there between by means of friction and in the tangential direction relative to the pulley discs 4, 5. Further as a result of such clamping forces Fax 1, Fax 2, the drive belt 3 is tensioned in its circumferential direction and, depending on, a/o, the clamping force ratio Fax1/Fax2, the local radius of curvature, i.e. running radius R1, R2 of the drive belt 3 between the pulley discs 4, 5 of the pulleys 1, 2 is set.

Within the context of the present invention, the drive belt 3 is a so-called pushbelt that comprises an endless tensile means 30 and a number of individual transverse members 32, which are oriented predominantly transversely to the tensile means 30 and which are supported and guided thereby, at least during operation of the transmission. Further within the context of the present invention, both the transverse members 32 of the drive belt 3 and the discs 4, 5 of the pulleys 1, 2 are made of steel and are provided with a hard surface layer showing a HRC-hardness of more than 55 HRC. Moreover, the transmission is actively cooled and lubricated during operation by means of a (forced) circulation of lubrication oil.

Figure 2 depicts the drive belt 3 in more detail in a perspective view of a small section thereof. The drive belt 3 is shown to comprise a row of the transverse members 32 that are mounted on the endless carrier 30, which is shown to be composed of two packages of a number of nested, endless bands 31. The said lateral side faces 35 of the drive belt 3 are provided by the predominantly axially facing end faces 35 of the transverse members 32. The lateral side faces 35 mutually diverge in radially outward direction such that a belt angle of typically 22 degrees is defined there between. The V-angle defined between the running surfaces 8 of the pulley discs 4, 5 of the pulleys 1, 2 essentially matches such belt angle.

In the transmission the transverse members 32 take-up the forces exerted thereon by the pulleys 1, 2 through the said lateral side faces 35 of the drive belt 3, such that -when a pulley 1, 2 is rotationally driven by, for instance, an internal combustion engine- friction between the running surfaces 8 of the pulley discs 4, 5 and the drive belt 3 causes the transverse members 32 to be thrust from the rotationally driven pulley 1, 2 to the respective other pulley 2, 1 that, in turn, is rotated by the drive belt 3.

In relation to the lateral side faces 35 it is known to apply a flat surface with an irregular surface texture on a microscopic scale, however, within the context of the present invention, the lateral side faces 35 profiled on a macroscopic level (i.e. on a scale visible with the naked eye) with higher lying, projecting parts for contacting the pulley discs 4, 5 and with lower lying, relatively recessed parts. In the shown example of such profiled lateral side face 35 in figure 3, the profile is consituted by a regular surface corrugation that is defined by a number of mutually alternating ridges 36 and grooves 37. The ridges 36 and grooves 37 are provided with their respective long axis oriented in parallel with the thickness direction of the transverse member 32, i.e. essentially in parallel with the circumferential or longitudinal direction of the drive belt 3. In the frictional contact with the running surfaces 8 of the pulley discs 4, 5 the normal and the friction force will be essentially carried by the ridges 36, whereas the grooves 37 can accommodate the lubrication oil. In this noted that it is customary in the art that the lateral side face 35, which is typically provided with an overall height dimension of 4 to 8 millimeter, includes more than 20, even up to 75 separate grooves. Thus, such known profile is provided on a very fine scale that is, however, still visible with the naked eye.

The above-described, well-known transmission has been successfully applied over many years in passenger vehicles. Because improving the (fuel) efficiency of such vehicles is presently considered of essential importance in the industry, also the efficiency of the known transmission has become a major R&D topic. In this respect, it is known that such transmission efficiency can be improved by increasing the traction, i.e. the coefficient of friction between the drive belt and the pulleys. However, as a typical consequence thereof, also the rate of wear of, in particular, the drive belt will increase and the durability of the transmission would decrease. Still, according to invention, an improvement of the said traction is still possible, in terms of an optimised surface roughness specification of the running surfaces 8 of the pulley discs 4, 5 of the transmission pulleys 1, 2, without compromising the durability of the transmission as a whole.

It is a first insight underlying the present invention that any such optimised specification is highly dependent on the design of the transmission and is thus only applicable to certain, specific transmission type. In relation to the presently considered transmission type the following surface roughness specification was found to provide a relatively high traction at relatively low wear:

- 0.01 micron < Ra < 1.0 micron,
- Rsk < 0 micron

with Ra and Rsk being defined in the (ISO) standard manner:

$$Ra = \frac{1}{L} \cdot \int_0^L |y(x)| \, dx \qquad (1)$$

$$Rsk = \left(\frac{1}{Rq^3}\right) \cdot \left(\frac{1}{L} \cdot \int_0^L (y(x))^3 \, dx\right) \qquad (2)$$

$$Rq = \sqrt{\left(\frac{1}{L} \cdot \int_0^L (y(x))^2 \, dx\right)} \qquad (3)$$

In the above equations (1), (2) and (3) and as illustrated in figure 4 along a theoretical, i.e. sinusoidal, surface roughness profile, the parameter L represents the (measurement) length on the surface in the measurement direction or x-axis (i.e. the abscissa) and the y-coordinates on the y-axis (i.e. the ordinate) representing the height contour, i.e. the roughness profile or topography of the surface along such length L. The equation (1) can be approximated in the normal way, by dividing the surface roughness profile in small, but discrete sections and using a summation of the height (y-coordinate) of each section:

$$Ra = \frac{1}{n} \cdot \sum_{i=1}^{i=n} |y_i| \qquad (4)$$

A similar approximation can of course be made for equations (2) and (3) as well.

Further, according to the invention, it is preferable that the running surface of the pulley disc additionally satisfy the surface roughness specification:

- Rku > 3 micron

with Rku being defined in the (ISO) standard manner:

$$Rku = \left(\frac{1}{Rq^4}\right) \cdot \left(\frac{1}{L} \cdot \int_0^L (y(x))^4 \, dx\right) \qquad (5)$$

The invention not only relates to the entirety of the preceding description and all details of the pertaining figures, but also to all the features of the following claims.

**Claims**

1. Continuously variable transmission with a drive belt (3) and with two pulleys (1, 2) that are each provided with two pulley discs (4, 5) with a running surface (8) that is in frictional contact with the drive belt (3), which drive belt (3) is provided with an endless tensile means (30) and with a number of transverse members (32) that are mounted on the endless tensile means (30), while being moveable along the along the circumference thereof, and that are each on either side thereof provided with a lateral side face (35) for the said frictional contact with the pulley discs (4, 5), wherein the running surfaces (8) of the pulleys (1, 2) are made of steel and have a surface hardness between 55 HRC and 65 HRC, wherein the lateral side faces (35) of the transverse members (32) also are made of steel and have a surface hardness between 55 HRC and 65 HRC and, moreover, are provided with a profile in the form of a number of, mutually alternating ridges (36) and grooves (37), and wherein, during operation of the transmission, the said frictional contact is cooled by means of a circulating lubrication oil, wherein a surface texture of the running surfaces (8) of the pulleys (1, 2) is irregular and has an ISO-standard average roughness value Ra in the range from 0.01 to 1.0 micron and, as such, is **characterized by**, an ISO-standard skewness value Rsk of less than zero and an ISO-standard kurtosis value Rku of more than 3 microns, preferably more than 5 microns.

2. The continuously variable transmission according to the claim 1, **characterized in that** the surface texture of the running surfaces (8) of the pulleys (1, 2) additionally has an ISO-standard highest peak from mean line $R_p$ value of less than 2 microns.

3. The continuously variable transmission according to the claim 1, **characterized in that** a surface hardness and the ISO-standard average roughness value Ra of the running surfaces (8) of the pulleys (1, 2) satisfy the following relationship: 55.5 - 3•log(Ra) < SH < 61.5 - 3•log(Ra) with SH being the surface hardness in HRC.

**Patentansprüche**

1. Stufenloses Getriebe mit einem Antriebsriemen (3) und mit zwei Rollen (1, 2), die jeweils mit zwei Rollenscheiben (4, 5) mit einer Lauffläche (8), die mit dem Antriebsriemen (3) in Reibkontakt steht, versehen sind, wobei der Antriebsriemen (3) mit einem Endloszugmittel (30) und mit einer Anzahl an Querelementen (32), die auf dem Endloszugmittel (30) befestigt und gleichzeitig entlang dessen Umfang bewegbar sind und die jeweils auf jeder Seite davon mit einer lateralen Seitenfläche (35) für den Reibkontakt mit den Rollenscheiben (4, 5) versehen sind, versehen ist, wobei die Laufflächen (8) der Rollen (1, 2) aus Stahl hergestellt sind und eine Oberflächenhärte zwischen 55 HRC und 65 HRC aufweisen, wobei die lateralen Seitenflächen (35) der Querelemente (32) auch aus Stahl hergestellt sind und eine Oberflächenhärte zwischen 55 HRC und 65 HRC aufweisen und darüber hinaus mit einem Profil in Form einer Anzahl an gegenseitig abwechselnden Stegen (36) und Nuten (37) versehen sind, und wobei der Reibkontakt während des Betriebs des Getriebes durch ein zirkulierendes Schmieröl gekühlt wird, wobei eine Oberflächenstruktur der Laufflächen (8) der Rollen (1, 2) unregelmäßig ist und einen Mittenrauwert Ra nach ISO-Norm im Bereich von 0,01-1,0 Mikrometer aufweist, und somit durch einen Schiefewert Rsk nach ISO-Norm unter null und einen Kurtosiswert Rku nach ISO-Norm von mehr als 3 Mikrometer, vorzugsweise mehr als 5 Mikrometer, charakterisiert ist.

2. Stufenloses Getriebe nach Anspruch 1, **dadurch gekennzeichnet, dass** die Oberflächenstruktur der Laufflächen (8) der Rollen (1, 2) zusätzlich einen Wert Rp des Abstands des höchsten Punkts von der Mittellinie nach ISO-Norm von unter 2 Mikrometer aufweist.

3. Stufenloses Getriebe nach Anspruch 1, **dadurch gekennzeichnet, dass** eine Oberflächenhärte und der Mittenrauwert Ra nach ISO-Norm der Laufflächen (8) der Rollen (1, 2) der folgenden Beziehung genügen: 55,5 - 3*log(Ra) < SH < 61,5 - 3*log(Ra), wobei SH die Oberflächenhärte in HRC ist.

**Revendications**

1. Transmission à variation continue comportant une courroie d'entraînement (3) et deux poulies (1, 2) qui comprennent chacune deux disques de poulie (4, 5) comportant une surface de roulement (8) se trouvant en contact de frottement avec la courroie d'entraînement (3), ladite courroie d'entraînement (3) comprenant un moyen de tension sans fin (30) et un certain nombre d'éléments transversaux (32) qui sont installés sur le moyen de tension sans fin (30), tout en étant déplaçables le long de sa circonférence, et qui comprennent chacun, sur leurs deux côtés, une face de côté latérale (35) servant audit contact de frottement avec les disques de poulie (4, 5), les surfaces de roulement (8) des poulies (1, 2) étant constituées d'acier et présentant une dureté de surface comprise entre 55 HRC et 65 HRC, les faces de côté latérales (35) des éléments transversaux (32) étant également constituées d'acier et présentant une dureté de surface comprise entre 55 HRC et 65 HRC et, en outre, comprenant un profil se présentant sous la forme d'un certain nombre de nervures (36) et de rainures (37) mutuellement alternées, et ledit contact de frottement étant, lors du fonctionnement de la transmission, refroidi au moyen d'une huile de graissage en circulation, une texture de surface des surfaces de roulement (8) des poulies (1, 2) étant irrégulière et présentant une valeur de rugosité moyenne Ra selon l'ISO située dans la plage de 0,01 à 1 micromètre et, par là même, étant **caractérisée en ce qu'**elle présente une valeur d'asymétrie Rsk selon l'ISO inférieure à 0 et une valeur d'aplatissement Rku selon l'ISO supérieure à 3 micromètres, de préférence supérieure à 5 micromètres.

**2.** Transmission à variation continue selon la revendication 1, **caractérisée en ce que** la texture de surface des surfaces de roulement (8) des poulies (1, 2) présente de plus une valeur de hauteur du pic le plus haut par rapport à la ligne moyenne Rp selon l'ISO inférieure à 2 micromètres.

**3.** Transmission à variation continue selon la revendication 1, **caractérisée en ce qu'**une dureté de surface et la valeur de rugosité moyenne Ra selon l'ISO des surfaces de roulement (8) des poulies (1, 2) vérifient la relation suivante : $55,5 - 3 \cdot \log(Ra) < SH < 61,5 - 3 \cdot \log(Ra)$ où SH est la dureté de surface sur l'échelle HRC.

**FIG. 1**

**FIG. 2**

**FIG. 3**

**FIG. 4**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0777069 B1
- JP 2005273866 A
- EP 0997670 A2
- DE 102004051360 A1
- US 2005217111 A